# EUROPÄISCHE PATENTSCHRIFT

(11) **EP 0 628 714 B1**
(45) Veröffentlichungstag und Bekanntmachung des Hinweises auf die Patenterteilung: **15.01.1997**
(21) Anmeldenummer: 94107169.8
(22) Anmeldetag: 07.05.1994
(51) Int. Cl.: F02D 21/08, F01N 3/20

(54) **Verfahren und Vorrichtung zur Reduzierung von Stickoxiden im Abgas einer Brennkraftmaschine**
Method and device for reducing nitrogen oxides (NOx) of internal combustion engine exhaust gas
Procédé et dispositif de réduction d'oxydes d'azote (NOx) des gaz d'échappement d'un moteur à combustion interne

(30) Priorität: 10.06.1993 DE 4319294
(43) Veröffentlichungstag der Anmeldung: 14.12.1994
(73) Patentinhaber: DAIMLER-BENZ AKTIENGESELLSCHAFT, 70567 Stuttgart (DE)
(72) Erfinder: Boegner, Walter, D-71686 Remseck 1 (DE); Haak, Dr. Karl-Ernst, D-73669 Lichtenwald 2 (DE); Krutzsch, Dr. Bernd, D-73770 Denkendorf (DE); Wenninger, Günter, D-70599 Stuttgart (DE)

(56) Entgegenhaltungen:
- EP-A- 0 424 966
- EP-A- 0 460 542
- JP-A- 2 187 149
- US-A- 3 699 683
- US-A- 4 061 724
- US-A- 5 164 350
- PATENT ABSTRACTS OF JAPAN vol. 15, no. 345 (C-0864) 3. September 1991 & JP-A-03 135 417 (MATSUSHITA ELECTRIC IND CO) 10. Juni 1991
- PATENT ABSTRACTS OF JAPAN vol. 12, no. 014 (M-659) 16. Januar 1988 & JP-A-62 174 522 (TOYOTA MOTOR CORP.) 31. Juli 1987

## Beschreibung

Die Erfindung betrifft ein Verfahren zur Reduzierung von Stickoxiden im Abgas einer Brennkraftmaschine gemäß den Merkmalen im Oberbegriff von Patentanspruch 1 oder 3.

Ein Verfahren der gattungsgemäßen Art ist aus der JP-A-91-135417 bekannt. Die von der Brennkraftmaschine emittierten Abgase durchströmen einen Adsorber in der Abgasleitung, der für die Adsorption der Stickoxide einen Zeolithen enthält. Im Zeolithen durch Adsorption gespeicherte Stickoxide werden nachfolgend mit Hilfe von sauerstoffarmem und in einem Heißgaserzeuger erhitztem Abgas durch Desorption vom Adsorptionselement getrennt und einem Reduktionskatalysator zugeführt, in dem die Stickodide sodann zu Stickstoff und Sauerstoff reagieren.

Ein Nachteil ist, daß durch den Reduktionskatalysator die Brennkraftmaschine an eine bestimmte Betriebsweise gebunden ist.

Ferner ist zur nachmotorischen NOx-Verminderung das SCR-Verfahren (Selective-Catalytic-Reduction) Stand der Technik, bei dem ein Reduktionsmittel notwendig ist.

Desweiteren ist es aus der EP-A-0 460 542 A2 bei einer Brennkraftmaschine mit einer Abgasanlage bekannt, die Kohlenwasserstoffe bis zur Erreichung der Arbeitstemperatur des Katalysators der Abgasanlage zunächst in einem Adsorber zu speichern und danach, wenn der Katalysator seine Arbeitstemperatur erreicht hat mittels des Abgases aus dem Adsorber zu desorbieren und über eine Rückführleitung den Brennräumen der Brennkraftmaschine wieder zuzuführen.

Der Erfindung liegt die Aufgabe zugrunde, ein Verfahren zur Reduzierung der Stickoxide anzugeben, daß ohne zusätzliche Reduktionsmittel auskommt und im gesamten Betriebsbereich einer beliebigen Brennkraftmaschine uneingeschränkt einsetzbar ist.

Die Aufgabe ist erfindungsgemäß durch die kennzeichnenden Merkmale der Patentansprüche 1 und 3 gelöst.

Wesentliches Merkmal der erfindungsgemäßen Verfahren ist die Rückführung der zunächst im Adsorptionselement gespeicherten Stickoxide in die Ansaugluft der Brennkraftmaschine. Zusammen mit der Ansaugluft gelangen die Stickoxide so in den Verbrennungsprozeß der Brennkraftmaschine. Da die Stickoxide thermodynamisch instabil sind, können diese bei den im Brennraum herrschenden Reaktionsbedingungen zu N₂ und O₂ reagieren. Dabei sind weiterhin auch chemische Reaktionen mit C, CO oder Kohlenwasserstoffen möglich, die ebenfalls zum Abbau der Stickoxide beitragen. Ein wesentlicher Vorteil der erfindungsgemäßen Verfahren besteht darin, daß zur Reduzierung der Stickoxide kein Reduktionsmittel benötigt wird, das entweder an Bord erzeugt oder in einem separaten Behälter mitgeführt werden muß.
Mit den kennzeichnenden Merkmalen der Unteransprüche sind dabei besonders vorteilhafte Vorrichtungen zur Durchführung eines der Verfahren gemäß Patentanspruch 1 oder 3 gekennzeichnet.

Weitere Eigenschaften und Vorteile der Erfindung ergeben sich aus den Merkmalen der Unteransprüche.

In der nachfolgenden Zeichnungsbeschreibung werden verschiedene Ausführungsbeispiele der Erfindung näher erläutert:

Es zeigen:
Fig. 1 Schematisch vorzugsweise für eine Diesel-Brennkraftmaschine eine Vorrichtung zur Durchführung des Verfahrens mit zwei parallelgeschalteten Adsorbern im Abgassystem;
Fig. 2 Schematisch vorzugsweise eine Vorrichtung für eine Otto-Brennkraftmaschine zur Durchführung des Verfahrens mit einem Adsorber und parallelgeschaltetem 3-Wege-Katalysator im Abgassystem;
Fig. 3 eine Vereinfachung der Vorrichtung von Fig. 2.

Das erfindungsgemäße Verfahren zur Reduzierung der Stickoxide im Abgas einer Brennkraftmaschine umfaßt folgende wesentlichen Verfahrensschritte:
- Die von der Brennkraftmaschine emittierten Abgase werden durch einen Adsorber geleitet und die Stickoxide vom Adsorptionsmittel durch Adsorption gebunden. Als Adsportionsmittel geeignete Werkstoffe wären beispielsweise Verbindungen, wie Perowskite, z.B. LaCoO₃, die große Mengen Stickoxide selektiv durch Adsorption binden können.
- Sobald der Adsorber seine Speicherkapazität erreicht hat, werden die Stickoxide mit Hilfe eines Heißgases durch Desorption vom Adsorptionsmittel getrennt und der Ansaugluft der Brennkraftmaschine zugemischt.
- Mit der Ansaugluft gelangen die Stickoxide in die Brennräume der Brennkraftmaschine, wo sie auf Grund der vorherrschenden Reaktionsbedingungen zu N₂ und O₂ reagieren.

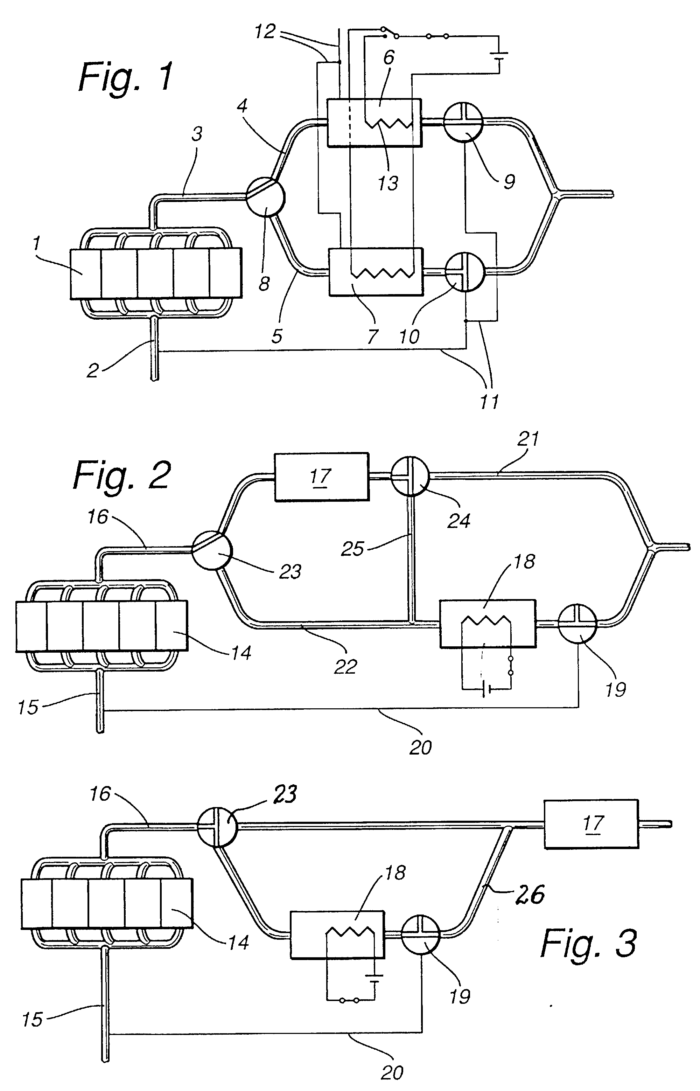

In Fig. 1 ist nun eine Vorrichtung gezeigt, welche zur Durchführung des Verfahrens bei einer Diesel-Brennkraftmaschine besonders geeignet ist.

Mit 1 ist eine mehrzylindrige Diesel-Brennkraftmaschine bezeichnet, die eine Ansaugleitung 2 und eine abführende Abgasleitung 3 besitzt. Die Abgasleitung 2 verzweigt sich in zwei parallele Abgasteilleitungen 4 und 5, in denen jeweils ein Adsorber 6 und 7 für Stickoxide angeordnet ist. Damit die beiden Adsorber 6 und 7 wechselweise betrieben werden können, ist stromauf in der Verzweigung zwischen der Abgasleitung 3 und den Teilleitungen 4 und 5 ein Steuerventil 8 vorgesehen ist. Stromab der Adsorber 6 und 7 ist innerhalb der Teilleitungen 4 und 5 je ein Rückführventil 9 bzw. 10 eingesetzt, von denen eine mit der Ansaugleitung 2 verbundene Rückführleitung 11 abgeführt ist. Ferner ist an jeden Adsorber 6, 7 eine Luftleitung 12 angeschlossen sowie eine beispielsweise elektrisch betriebe Heizung 13 vorgesehen. Luftleitung 12 und Heizung 13 dienen dabei zur Desorption der Stickoxide aus den Adsorbern 6, 7. Gemäß Fig. 1 ist der Adsorber 6 durch das Steuerventil 8 direkt mit der Abgasleitung 3 verbunden. Das von der Brennkraftmaschine 1 emittierte Abgas durchströmt den Adsorber 6, der mit einem Adsorbermaterial, z.B. LaCoO₃ ausgestattet ist, wobei die Stickoxide im Abgas von dem Adsorbermaterial durch Adsorption gebunden werden. Das Rückführventil 9 befindet sich in Durchflußstellung zur nach außen weiterführenden Abgasteilleitung 4. In dieser Adsorptionsphase wird die Heizung 13 nicht betätigt. Auch erfolgt keine Zufuhr von Luft durch die Luftförderleitung 12 zum Adsorber 6. Während der Adsorber 6 im Adsorptionsbetrieb arbeitet, arbeitet der Adsorber 7 im Desorptionsbetrieb, in dem die Stickoxide vom Adsorbermaterial getrennt werden. Dies erfolgt durch Zufuhr von Luft durch die Luftleitung 12, welche mittels der eingeschalteten Heizung 13 aufgeheizt wird. Mit dem so gebildeten Heißgas werden die Stickoxide über das mit der Rückführleitung 11 in Durchflußverbindung stehende Rückführventil in die Ansaugleitung 2 und damit in die Brennräume der Brennkraftmaschine 1 zurückgeführt, wo zu Stickstoff und Sauerstoff reagieren.

Sobald der Adsorber 7 regeneriert ist, wir das Steuerventil 8 umgeschaltet und dieser damit auf Adsorptionsbetrieb geschaltet. Mit dem Umschalten des Steuerventils 8 wird im Adsorber 6 gleichzeitig der Desorptionsbetrieb eingeleitet, indem die Heizung 6 eingeschaltet und Luft durch die Luftförderleitung 12 zugeführt, wobei die Stickoxide wie zuvor für den Adsorber 7 beschrieben vom Adsorptionsmaterial getrennt und über das Rührführventil 9 und die Rückführleitung 11 der Ansaugleitung 2 zugeführt werden.

In den Fig. 2 und 3 ist je eine Vorrichtung für das erfindungsgemäße Verfahren gezeigt, welche sich speziell zur Reduzierung der Stickoxide im Abgas von gemischverdichtenden Brennkraftmaschinen eignet.

Die gemischverdichtende Brennkraftmaschine ist mit 14 bezeichnet und besitzt eine Ansaugleitung 15 sowie eine Abgasleitung 16. In der Abgasleitung 16 befindet sich ein 3-Wege-Katalysator 17 und ein Adsorber 18 zur Adsorption der im Abgas enthaltenen Stickoxide. Dem Adsorber 18 ist jeweils ein Rückführventil 19 nachgeschaltet, von dem eine Rückführleitung 20 abgeführt und mit der Ansaugleitung 15 verbunden ist.

Gemäß der Fig.2 verzweigt sich die Abgasleitung 16 in zwei parallel verlaufende Abgasteilleitungen 21 und 22, wobei in der Teilleitung 21 der 3-Wege-Katalysator 17 und in der Teilleitung 22 der Adsorber 18 mit dem Rückführventil 19 angeordnet ist. Mittels eines Steuerventils 23 kann das Abgas von der Abgasleitung 16 in die Abgasteilleitung 21 oder 22 gesteuert werden. Außerdem ist in der Abgasteilleitung 21 stromab des 3-Wege-Katalysators 17 ein Umsteuerventil 24 vorgesehen, von dem eine mit der Abgasteilleitung 22 stromauf des Adsorbers 18 verbundene Verbindungsleitung 25 abgeführt ist.

In Fig. 2 ist die Vorrichtung für den Adsorptionsbetrieb eingestellt. Die von der Brennkraftmaschine emittierten Abgase gelangen über das Steuerventil 23 in die Abgasteilleitung und durchströmen den 3-Wege-Katalysator 17. Um hierbei eine optimale Behandlung der Schadstoffe zu erreichen, wird die Brennkraftmaschine mit einem Luftverhältnis λ = 1 oder >1 betrieben. Vom Umsteuerventil 24 wird der Abgasstrom durch die Verbindungsleitung 25 in die Abgasteilleitung geleitet, der den Adsorber 18 durchströmt und über das Rückführventil 19 ins Freie abgeführt wird. Im Adsorber 18 werden die im Abgas enthaltenen Stickoxide durch Adsorption an das Adsorptionsmaterial gebunden. Sobald der Adsorber 18 seine Sättigungsgrenze erreicht hat, wird die Vorrichtung auf Desorptionsbetrieb umgeschaltet.
Für den Desorptionsbetrieb wird das Umsteuerventil 24 in Durchgangsstellung geschaltet, so daß die den Katalysator verlassenden Abgase unter Umgehung des Adsorbers abgeführt werden. Das Rückführventil wird so geschaltet, daß die Durchströmung der Abgasteilleitung 22 gesperrt und die Rückführleitung 20 mit dem Adsorber 18 verbunden ist.
Da in der Desorptionsphase der Adsorber außer Betrieb ist, wird zur Vermeidung einer übermäßigen Stickoxidbildung, die Brennkraftmaschine mit einem Luftverhältnis λ = 1 oder <1 betrieben. Anders als im Ausführungsbeispiel der Fig. 1 wird bei der Vorrichtung gemäß Fig. 2 für die Regeneration des Adsorbers 18 ein Teil des Abgasstromes anstelle von Luft eingesetzt. Zu diesem Zweck ist das Steuerventil 23 so aufgebaut, daß in einer der möglichen Schaltstellungen eine Abgasteilmenge von etwa 5% in die Abgasteilleitung 22 gefördert wird, während der restliche Abgashauptstrom von 95% in die Abgasteilleitung 21 mit dem Katalysator 12 eingesteuert wird. Hierdurch kann auf eine besondere Luftförderleitung verzichtet werden. Falls die Temperatur der Abgasteilmenge für die Regeneration des Adsorbers nicht ausreichen sollte, kann die auch hier bei dieser Vorrichtung vorgesehene Heizung 13 zugeschaltet werden. Die in der Desortionsphase aus dem Adsorber 18 mit dem Abgasteilstrom ausgetriebenen Stickoxide werden über das Rückführventil 19 und die Rückführleitung 20 in die Ansaugleitung 15 rückgeführt, wo sie mit der Ansaugluft vermischt den Brennräumen der Brennkraftmaschine 14 wieder zugeführt, wo sie - wie bereits geschildert - zu Stickstoff und Sauerstoff reagieren.

Die Vorrichtung der Fig. 3 unterscheidet sich von derjenigen der Fig. 2 dadurch, daß der Adsorber 18 in einer stromauf des Katalysators 17 von der Abgasleitung abgezweigten Bypaßleitung 26 angeordnet ist. Eine derartige Vorrichtung ist besonders für einen Magerbetrieb der Brennkraftmaschine 14 mit einem Luftverhältnis λ >1 geeignet. Fig. 3 zeigt die Vorrichtung für den Adsorptionsbetrieb. Das Steuerventil 23 und das Rückführventil sind so geschaltet, daß die Abgase zunächst dem Adsorber 18 und erst dann dem Katalysator 17 zugeführt werden. Im Adsorber 18 werden die Stickoxide durch Adsorption an das Adsorptionsmaterial gebunden, so daß dem Katalysator 17 Abgas zuströmt, daß keine oder kaum noch Stickoxide enthält.
Sobald die Speicherkapazität des Adsorbers 18 erreicht ist, wird auf Desorptionsbetrieb umgeschaltet, wobei die Abgase der Brennkraftmaschine 14 direkt dem Katalysator 17 zugeführt werden. Mit Beginn des Desorptionsbetriebs wurde gleichzeitig die Brennkraftmaschine von Magerbetrieb auf stöchiometrischen Betrieb umgestellt, um den Stickoxidanteil im Abgas zu verringern. Der weitere Ablauf entspricht dem in Fig. 2 beschriebenen Desorptionsvorgang. Nach der Regeneration des Adsorbers wird wieder auf Adsorptionsbetrieb umgeschaltet.

Im Rahmen der Erfindung ist es selbstverständlich auch denkbar, daß bei den Ausführungsbeispielen der Fig. 2 und 3 zur Desorption anstatt Abgas heiße Luft sowie bei der Vorrichtung der Fig. 1 heißes Abgas anstatt heiße Luft eingesetzt werden.

## Patentansprüche

1. Verfahren zur Reduzierung von Stickoxiden im Abgas einer Brennkraftmaschine (1, 14) durch Adsorption der Stickoxide in einem Adsorber (6), der zusammen mit einem weiteren Abgasreiniger (7) im Verlauf einer Abgasleitung (3) der Brennkraftmaschine (1, 14) angeordnet ist, sowie zeitlich nachfolgender Desorption der Stickoxide mittels eines heißen Gases und danach Beimischen der Stickoxide zur Ansaugluft der Brennkraftmaschine (1, 14) und Reaktion des Stickoxids im Brennraum zu Stickstoff (N₂) und Sauerstoff (O₂),
**dadurch gekennzeichnet,**
daß die Stickoxide wechselweise im einen Adsorber (6) und dem parallel zu diesem in der Abgasleitung geschalteten und als weiteren Adsorber (7) ausgebildeten Abgasreiniger adsorbiert und desorbiert werden.

2. Vorrichtung zur Durchführung des Verfahrens nach Anspruch 1 mit einer Brennkraftmaschine (1), einer von der Brennkraftmaschine (1) abführenden Abgasleitung (3), in deren Verlauf ein Abgasreiniger und ein Adsorber (6) zur Adsorption von Stickoxiden aus dem Abgas der Brennkraftmaschine (1) vorgesehen ist, ferner mit einer Ansaugleitung (2) zur Zuführung von Ansaugluft in die Brennräume der Brennkraftmaschine (1) und mit mindestens einer von der Abgasleitung (3) stromab des Adsorbers (6) über ein Rückführventil (9, 10) abzweigenden und mit der Ansaugleitung (2) verbundenen Rückführleitung (11),
**dadurch gekennzeichnet**,
daß die Abgasleitung (3) in ihrem Verlauf in zwei parallele Abgasteilleitungen (4, 5) aufgeteilt ist, wobei in einer Abgasteilleitung (4 oder 5) der Adsorber (6) und in der anderen Abgasteilleitung (4 oder 5) der als Adsorber (7) ausgebildete Abgasreiniger angeordnet ist,
daß zur Steuerung des Abgasstromes in eine der Abgasteilleitungen (4, 5) stromauf der Adsorber (6, 7) eine Steuerventil (8) angeordnet ist,
und daß in jeder Abgasteilleitung (4, 5) eine über Rückführventile (9, 10) gesteuerte Rückführleitung (11) abgezweigt und mit der Ansaugleitung (2) verbunden ist.

3. Verfahren zur Reduzierung von Stickoxiden im Abgas einer Brennkraftmaschine (14) durch Adsorption der Stickoxide in einem Adsorber (18), der zusammen mit einem weiteren Abgasreiniger (17) im Verlauf einer Abgasleitung (16) der Brennkraftmaschine (14) angeordnet ist, sowie zeitlich nachfolgender Desorption der Stickoxide mittels eines heißen Gases und danach Beimischen der Stickoxide zur Ansaugluft der Brennkraftmaschine (1, 14) und Reaktion des Stickoxids im Brennraum zu Stickstoff (N₂₎ und Sauerstoff (O₂),
**dadurch gekennzeichnet**,
daß bei einer gemischverdichtenden Brennkraftmaschine (14) der Abgasreiniger ein Katalysator (17) ist, wobei die Brennkraftmaschine (14) in der Adsorptionsphase mit Luftüberschuß und für die Desorptionsphase mit einem stöchiometrischen oder annähernd stöchimetrischen Gemisch betrieben wird und daß in der Desorptionsphase ein mengenmäßig kleiner Abgasstrom dem Adsorber (18) zugeleitet wird, während der übrige Abgashauptstrom den Katalysator (17) direkt beaufschlagt.

4. Vorrichtung zur Durchführung des Verfahrens nach Anspruch 3 mit einer gemischverdichtenden Brennkraftmaschine (14), einer von der Brennkraftmaschine (14) abführenden Abgasleitung (16), in deren Verlauf ein Katalysator (17) und ein Adsorber (18) zur Adsorption von Stickoxiden aus dem Abgas der Brennkraftmaschine (14) vorgesehen sind, ferner mit einer Ansaugleitung (15) zur Zuführung von Ansaugluft in die Brennräume der Brennkraftmaschine (14) und mit mindestens einer von der Abgasleitung (16) stromab des Adsorbers (18) über ein Rückführventil (19) abzweigenden und mit der Ansaugleitung (15) verbundenen Rückführleitung (20),
**dadurch gekennzeichnet**,
daß die Abgasleitung (16) in ihrem Verlauf in zwei parallele Abgasteilleitungen (21, 22) aufgeteilt ist, wobei in einer Abgasteilleitung (21 oder 22) der Katalysator (17) und in der anderen Abgasteilleitung (21 oder 22) der Adsorber (18) angeordnet ist,
daß zur Steuerung des Abgasstromes in eine der Abgasteilleitungen (21 oder 22) stromauf des Katalysators (17) ein Steuerventil (23) angeordnet ist,
und daß in der Abgasteilleitung (21) stromab des Katalysators (17) ein Umsteuerventil (24) vorgesehen ist, von dem eine Verbindungsleitung (25) abgeführt ist und mit der Abgasteilleitung (22) stromauf des Adsorbers (18) verbunden ist.

5. Vorrichtung zur Durchführung des Verfahrens nach Anspruch 3 mit einer gemischverdichtenden Brennkraftmaschine (14), einer von der Brennkraftmaschine (14) abführenden Abgasleitung (16), in deren Verlauf ein Katalysator (17) und ein Adsorber (18) zur Adsorption von Stickoxiden aus dem Abgas der Brennkraftmaschine (14) vorgesehen sind, ferner mit einer Ansaugleitung (15) zur Zuführung von Ansaugluft in die Brennräume der Brennkraftmaschine (14) und mit mindestens einer von der Abgasleitung (16) stromab des Adsorbers (18) über ein Rückführventil (19) abzweigenden und mit der Ansaugleitung (15) verbundenen Rückführleitung (20),
**dadurch gekennzeichnet,**
daß der Adsorber (18) in einer von der Abgasleitung (16) stromauf des Katalysators (17) abgezweigten Bypaßleitung (26) angeordnet ist,
daß der Abgasstrom mittels eines Steuerventils (23) in die Bypaßleitung (26) steuerbar ist,
und daß die Abgasrückführleitung (20) stromab des Adsorbers (18) von der Bypaßleitung (26) abgeführt ist.

6. Vorrichtung nach einem der Ansprüche 2, 4 und 5,
**dadurch gekennzeichnet,**
daß zur Desorption in jedem Adsorber (6, 7, 18) eine elektrisch betriebene Heizvorrichtung (13) vorgesehen ist.

7. Vorrichtung nach einem der Ansprüche 2, 4 und 5,
**dadurch gekennzeichnet,**
daß an den Adsorber (6, 7, 18) eine Luftförderleitung angeschlossen ist, durch die Luft zum Austreiben der Stickoxide aus dem Adsorber (6, 7, 18) und Einleiten in die Rückführleitung (11, 20) gefördert wird.

## Claims

1. Method for reducing nitrogen oxides in the exhaust gas of an internal combustion engine (1, 14) by adsorption of the nitrogen oxides in an adsorber (6), which is arranged together with a further exhaust-gas cleaning device (7) in the course of an exhaust-gas line (3) of the internal combustion engine (1, 14), and subsequent desorption of the nitrogen oxides by means of a hot gas followed by admixture of the nitrogen oxides to the intake air of the internal combustion engine (1, 14) and reaction of the nitrogen oxide in the combustion space to give nitrogen (N₂) and oxygen (O₂), characterized in that the nitrogen oxides are alternately adsorbed and desorbed in one adsorber (6) and the exhaust-gas cleaning device connected in parallel with this in the exhaust-gas line and designed as a further adsorber (7).

2. Apparatus for executing the method according to Claim 1 with an internal combustion engine (1), an exhaust-gas line (3) which leads away from the internal combustion engine (1) and in the course of which an exhaust-gas cleaning device and an adsorber (6) for the adsorption of nitrogen oxides from the exhaust gas of the internal combustion engine (1) are provided, furthermore with an induction line (2) for feeding intake air into the combustion spaces of the internal combustion engine (1) and with at least one recirculation line (11), which branches off from the exhaust-gas line (3) downstream of the adsorber (6) via a recirculation valve (9, 10) and is connected to the induction line (2), characterized in that, at some point along its length, the exhaust-gas line (3) is divided into two parallel exhaust-gas branch lines (4, 5), the adsorber (6) being arranged in one exhaust-gas branch line (4 or 5) and the exhaust-gas cleaning device designed as an adsorber (7) being arranged in the other exhaust-gas branch line (4 or 5), in that a control valve (8) is arranged upstream of the adsorbers (6, 7) to direct the stream of exhaust gas into one of the exhaust-gas branch lines (4, 5), and in that a recirculation line (11) controlled by means of recirculation valves (9, 10) forms a branch in each exhaust-gas branch line (4, 5) and is connected to the induction line (2).

3. Method for reducing nitrogen oxides in the exhaust gas from an internal combustion engine (14) by adsorption of the nitrogen oxides in an adsorber (18), which is arranged together with a further exhaust-gas cleaning device (17) in the course of an exhaust-gas line (16) of the internal combustion engine (14), and subsequent desorption of the nitrogen oxides by means of a hot gas followed by admixture of the nitrogen oxides to the intake air of the internal combustion engine (1, 14) and reaction of the nitrogen oxide in the combustion space to give nitrogen (N₂) and oxygen (O₂), characterized in that, in the case of a mixture-compression type internal combustion engine (14), the exhaust-gas cleaning device is a catalytic converter (17), the internal combustion engine (14) being operated with excess air in the adsorption phase and, for the desorption phase, with a stoichiometric or approximately stoichiometric mixture, and in that in the desorption phase a quantitatively small stream of exhaust gas is fed to the adsorber (18), while the remaining, main stream of exhaust gas is admitted directly to the catalytic converter (17).

4. Apparatus for executing the method according to Claim 3 with a mixture-compression type internal combustion engine (14), an exhaust-gas line (16) which leads away from the internal combustion engine (14) and in the course of which a catalytic converter (17) and an adsorber (18) for the adsorption of nitrogen oxides from the exhaust gas of the internal combustion engine (14) are provided, furthermore with an induction line (15) for feeding intake air into the combustion spaces of the internal combustion engine (14) and with at least one recirculation line (20), which branches off from the exhaust-gas line (16) downstream of the adsorber (18) via a recirculation valve (19) and is connected to the induction line (15), characterized in that, at some point along its length, the exhaust-gas line (16) is divided into two parallel exhaust-gas branch lines (21, 22), the catalytic converter (17) being arranged in one exhaust-gas branch line (21 or 22) and the adsorber (18) being arranged in the other exhaust-gas branch line (21 or 22), in that a control valve (23) is arranged upstream of the catalytic converter (17) to direct the stream of exhaust gas into one of the exhaust-gas branch lines (21 or 22), and in that a reverse valve (24), from which a connecting line (25) is led off and connected to the exhaust-gas branch line (22) upstream of the adsorber (18), is provided in the exhaust-gas branch line (21) downstream of the catalytic converter (17).

5. Apparatus for executing the method according to Claim 3 with a mixture-compression type internal combustion engine (14), an exhaust-gas line (16) which leads away from the internal combustion engine (14) and in the course of which a catalytic converter (17) and an adsorber (18) for the adsorption of nitrogen oxides from the exhaust gas of the internal combustion engine (14) are provided, furthermore with an induction line (15) for feeding intake air into the combustion spaces of the internal combustion engine (14) and with at least one recirculation line (20), which branches off from the exhaust-gas line (16) downstream of the adsorber (18) via a recirculation valve (19) and is connected to the induction line (15), characterized in that the adsorber (18) is arranged in a bypass line (26) which forms a branch from the exhaust-gas line (16) upstream of the catalytic converter (17), in that the stream of exhaust gas can be directed into the bypass line (26) by means of a control valve (23) and in that the exhaust-gas recirculation line (20) is taken from the bypass line (26) downstream of the adsorber (18).

6. Apparatus according to one of Claims 2, 4 and 5, characterized in that an electrically operated heating device (13) is provided for desorption in each adsorber (6, 7, 18).

7. Apparatus according to one of Claims 2, 4 and 5, characterized in that an air feed line, through which air is fed to expel the nitrogen oxides from the adsorber (6, 7, 18) and introduce them into the recirculation line (11, 20), is connected to the adsorber (6, 7, 18).

## Revendications

1. Procédé de réduction d'oxydes d'azote des gaz d'échappement d'un moteur à combustion interne (1, 14) par adsorption des oxydes d'azote dans un adsorbant (6) qui est disposé avec un autre purificateur de gaz d'échappement (7) sur le parcours d'une conduite d'échappement (3) du moteur à combustion interne (1, 14) et désorption consécutive des oxydes d'azote à l'aide d'un gaz chaud et ensuite ajout des oxydes d'azote à l'air d'aspiration du moteur à combustion interne (1, 14) et réaction de l'oxyde d'azote dans la chambre de combustion à l'azote (N₂) et à l'oxygène (O₂), caractérisé en ce que les oxydes d'azote sont adsorbés et désorbés alternativement dans un adsorbant (6) et le purificateur de gaz d'échappement conçu comme autre adsorbant (7) monté en parallèle à celui-ci dans la conduite d'échappement.

2. Dispositif d'exécution du procédé selon la revendication 1, comportant un moteur à combustion interne (1), une conduite d'échappement (3) partant du moteur à combustion interne (1) et sur le parcours de laquelle sont prévus un purificateur de gaz d'échappement et un adsorbant (6) pour adsorber les oxydes d'azote provenant des gaz d'échappement du moteur à combustion interne (1), en outre une conduite d'aspiration (2) pour introduire l'air d'aspiration dans les chambres de combustion du moteur à combustion interne (1) et au moins une conduite de réaspiration (11) reliée à la conduite d'aspiration (2) et dérivant de la conduite d'échappement (3) en aval de l'adsorbant (6) par l'intermédiaire d'une valve de réaspiration (9, 10), caractérisé en ce que la conduite d'échappement (3) est divisée sur son parcours en deux conduites partielles d'échappement parallèles (4 ou 5), l'adsorbant (6) étant disposé dans une conduite partielle d'échappement (4 ou 5) et le purificateur de gaz d'échappement conçu comme adsorbant (7) étant disposé dans l'autre conduite partielle d'échappement (4 ou 5), en ce qu'une valve de régulation (8) est disposée dans l'une des conduites partielles d'échappement (4, 5) en amont de l'adsorbant (6, 7) pour commander le flux des gaz d'échappement et en ce que dans chaque conduite partielle d'échappement (4, 5), une conduite de réaspiration (11) commandée par des valves de réaspiration (9, 10) est dérivée et reliée à la conduite d'aspiration (2).

3. Procédé de réduction d'oxydes d'azote des gaz d'échappement d'un moteur à combustion interne (14) par adsorption des oxydes d'azote dans un adsorbant (18) qui est disposé avec un autre purificateur de gaz d'échappement (17) sur le parcours d'une conduite d'échappement (16) du moteur à combustion interne (14) et désorption consécutive des oxydes d'azote à l'aide d'un gaz chaud et ensuite ajout des oxydes d'azote à l'air d'aspiration du moteur à combustion interne (1, 14) et réaction de l'oxyde d'azote dans la chambre de combustion à l'azote (N₂) et à l'oxygène (O₂), caractérisé en ce que pour un moteur à combustion interne (14) comprimant le mélange, le purificateur de gaz d'échappement est un catalyseur (17), le moteur à combustion interne (14) étant utilisé durant la phase d'adsorption avec un excédent d'air et dans la phase de désorption avec un mélange stoechiométrique ou presque stoechiométrique et en ce que durant la phase de désorption, un flux de gaz d'échappement en faible quantité est amené à l'adsorbant (18) tandis que le flux principal restant de gaz d'échappement alimente directement le catalyseur (17).

4. Dispositif d'exécution du procédé selon la revendication 3, comportant un moteur à combustion interne (14) comprimant le mélange, une conduite d'échappement (16) partant du moteur à combustion interne (14) et sur le parcours de laquelle sont prévus un catalyseur (17) et un adsorbant (18) pour adsorber les oxydes d'azote provenant des gaz d'échappement du moteur à combustion interne (14), en outre une conduite d'aspiration (15) pour introduire l'air d'aspiration dans les chambres de combustion du moteur à combustion interne (14) et au moins une conduite de réaspiration (20) reliée à la conduite d'aspiration (15) et dérivant de la conduite d'échappement (16) en aval de l'adsorbant (18) par l'intermédiaire d'une valve de réaspiration (19), caractérisé en ce que la conduite d'échappement (16) est divisée sur son parcours en deux conduites partielles d'échappement parallèles (21, 22), le catalyseur (17) étant disposé dans une conduite partielle d'échappement (21 ou 22) et l'adsorbant (18) étant disposé dans l'autre conduite partielle d'échappement (21 ou 22), en ce qu'une valve de régulation (23) est disposée dans l'une des conduites partielles d'échappement (21 ou 22) en amont du catalyseur (17) pour commander le flux des gaz d'échappement et en ce que dans la conduite partielle d'échappement (21), en amont du catalyseur (7) est prévue une valve d'inversion (24) d'où part une conduite de raccordement (25) qui est reliée à la conduite partielle d'échappement (22) en amont de l'adsorbant (18).

5. Dispositif d'exécution du procédé selon la revendication 3, comportant un moteur à combustion interne (14) comprimant le mélange, une conduite d'échappement (16) partant du moteur à combustion interne (14) et sur le parcours de laquelle sont prévus un catalyseur (17) et un adsorbant (18) pour adsorber les oxydes d'azote provenant des gaz d'échappement du moteur à combustion interne (14), en outre une conduite d'aspiration (15) pour introduire l'air d'aspiration dans les chambres de combustion du moteur à combustion interne (14) et au moins une conduite de réaspiration (20) reliée à la conduite d'aspiration (15) et dérivant de la conduite d'échappement (16) en aval de l'adsorbant (18) par l'intermédiaire d'une valve de réaspiration (19), caractérisé en ce que l'adsorbant (18) est disposé dans une conduite de dérivation (26) dérivée de la conduite d'échappement (16) en amont du catalyseur (17), en ce que le flux de gaz d'échappement peut être régulé à l'aide d'une valve de régulation (23) dans la conduite de dérivation (26) et en ce que la conduite de réaspiration des gaz d'échappement (20) part de la conduite de dérivation (26) en aval de l'adsorbant (18).

6. Dispositif selon l'une quelconque des revendications 2, 4 et 5, caractérisé en ce qu'un dispositif de chauffage (13) électrique est prévu dans chaque adsorbant (6, 7, 18) pour la désorption.

7. Dispositif selon l'une quelconque des revendications 2, 4 et 5, caractérisé en ce qu'une conduite de transport d'air est reliée à l'adsorbant (6, 7, 18) et qu'à travers cette conduite, de l'air est transporté pour expulser les oxydes d'azote de l'adsorbant (6, 7, 18) et les introduire dans la conduite de réaspiration (11, 20).
